# EUROPÄISCHE PATENTSCHRIFT

(11) **EP 1 400 720 B1**
(45) Veröffentlichungstag und Bekanntmachung des Hinweises auf die Patenterteilung: **12.03.2008**
(21) Anmeldenummer: 03020885.4
(22) Anmeldetag: 15.09.2003
(51) Int. Cl.: F16D 59/02, B62B 3/06, B66F 17/00

(54) **Flurförderzeug mit einer elektrisch betätigten Bremseinrichtung**
Industrial truck with an electrically actuated brake device.
Chariot de manutention avec dispositif de freinage à actionnement éléctrique.

(30) Priorität: 17.09.2002 DE 10242976
(43) Veröffentlichungstag der Anmeldung: 24.03.2004
(73) Patentinhaber: Jungheinrich Aktiengesellschaft, 22047 Hamburg (DE)
(72) Erfinder: Vahldiek, Dietrich, Dipl.-Ing., 24558 Henstedt-Ulzburg (DE)
(74) Vertreter: Hauck Patent- und Rechtsanwälte

(56) Entgegenhaltungen:
- DE-A- 19 752 022
- US-A- 5 577 578

## Beschreibung

Die vorliegende Erfindung betrifft ein Flurförderzeug mit einer elektrisch betätigten Bremseinrichtung.

Bei einem Ausfall der Fahrsteuerung für den elektrischen Antrieb oder auch bei ausgebauter Fahrsteuerung ist es nicht möglich, daß Flurförderzeug ohne erhöhten Kraftaufwand zu bewegen. Der Grund hierfür liegt in der elektrisch betätigten Bremseinrichtung, die, wenn sie nicht angesteuert wird, die Bewegung des Flurförderzeuges bremst. In ungünstigen Situationen kann dies dazu führen, daß das Flurförderzeug Durchgänge und/oder Verkaufsflächen blockiert.

Bei bekannten Flurförderzeugen ist es in dieser Situation erforderlich, die Haube abzunehmen und über zwei Innensechskantschrauben die Position der Bremsbacken zu verstellen. Durch diesen Eingriff wird die Bremseinrichtung außer Kraft gesetzt. Nachteilig hieran ist jedoch, daß ein solcher Eingriff häufig durch das Bedienpersonal nicht immer ausgeführt werden kann. In der Regel ist es so, daß das ausgefallene Flurförderzeug bis zum Eintreffen eines Servicetechnikers nicht bewegt werden kann und damit den Verkehr behindert.

Der Erfindung liegt die Aufgabe zugrunde, ein Flurförderzeug zu schaffen, das bei einem Ausfall seiner Fahrsteuerung für den elektrischen Antrieb oder einer sonstigen Störung mit einfachen Mitteln und ohne großen Kraftaufwand bewegt werden kann. Dabei soll bei der Bewegung des Flurförderzeugs ausreichend sicherheit bestehen.

Die erfindungsgemäße Aufgabe wird durch ein Flurförderzeug mit den Merkmalen aus Anspruch 1 gelöst. Vorteilhafte Ausgestaltungen bilden den Gegenstand der Unteransprüche.

Aus der US-A-5 577 578 ist bekannt, mittels eines Schalters die Bremse beim ausgeschalteten motor zu lösen.

Erfindungsgemäß besitzt das Flurförderzeug einen elektrischen Antrieb mit einer elektrisch betätigten Bremseinrichtung, wobei ein mit einem Schlüssel betätigbarer Schalter und ein zusätzlicher Schalter vorgesehen sind. Im geschalteten Zustand von Schalter und zusätzlichem Schalter wird eine Versorgungsspannung direkt an die Bremseinrichtung angelegt, um diese zu lösen. Während im regulären Betrieb die Bremseinrichtung über eine Fahrsteuerung mit Strom versorgt wird erfolgt bei dem erfindungsgemäßen Flurförderzeug bei geschlossenen Schaltern eine Verbindung der Bremseinrichtung direkt mit der Spannungsquelle. Es wird also ein Notbetrieb bereitgestellt, der auch bei ausgefallener Steuerung gestattet, das Flurförderzeug mit vergleichsweise geringem Kraftaufwand zu bewegen. Zwei Schalter für den Notbetrieb vorzusehen, birgt den Vorteil, daß bei der Bewegung des Flurförderzeugs ausreichend Sicherheit besteht. Der mit dem Schlüssel betätigbare Schalter verhindert, daß Dritte das Flurförderzeug unkontrolliert in den Notbetrieb schalten und bewegen können. Ist der erste Schalter durch den Schlüssel betätigt, so ermöglicht der zusätzliche Schalter, daß Flurförderzeug auf einfache Weise wieder zu bremsen, ohne daß hierfür direkt über den Schlüssel geschaltet werden muß. Im Gegensatz zu der bisherigen Lösung, bei der die Bremsbacken verstellt werden müssen, und damit überhaupt keine Bremswirkung mehr erzielt wird, kann bei dem erfindungsgemäßen Flurförderzeug der Notbetrieb auch bei Schräglage eingesetzt werden, da über den zusätzlichen Schalter die Bremseinrichtung weiterhin betätigt werden kann.

In einer bevorzugten Ausgestaltung des Flurförderzeugs ist ein zweistufiges Schaltschloß vorgesehen, das in einer ersten Position den Fahrbetrieb und in einer zweiten Position ein Lösen der Bremseinrichtung durch den zusätzlichen Schalter zuläßt. Bevorzugt sind für das Schaltschloß zwei Typen von Schlüsseln vorgesehen, von denen ein erster Typ ein Schalten des Schalters nur in die erste Position zuläßt und der zweite Typ ein Schalten des Schalters in die erste sowie die zweite Position zuläßt. Mit Hilfe des Schaltschlosses, ist es möglich, bei den Benutzern des Flurförderzeuges zu unterscheiden, ob diese in den Notbetrieb schalten dürfen.

In einer bevorzugten Ausgestaltung weist das erfindungsgemäße Flurförderzeug eine Schaltplatine auf, die mit zwei Relais bestückt ist, von denen ein erstes im erregten Zustand die Verbindung von einer Spannungsquelle zu einer Steuerung für die Bremseinrichtung trennt und das zweite im erregten Zustand die Spannungsquelle direkt mit der Bremseinrichtung verbindet. In einer bevorzugten Ausgestaltung trennt das erste Relais die Verbindung der Spannungsquelle zur Steuerung bereits wenn der durch den Schlüssel betätigte Schalter in der zweiten Position ist. Die Spannungsquelle wird durch das zweite Relais direkt mit der Bremseinrichtung verbunden, wenn der zusätzliche Schalter geschlossen ist.

In einer alternativen Ausgestaltung weist das erfindungsgemäße Flurförderzeug eine Schaltplatine auf, die nur mit einem Relais bestückt ist, das im erregten Zustand die Spannungsquelle direkt mit der Bremseinrichtung verbindet. Diese Ausgestaltung setzt voraus, daß bei einer Erregung des einzigen Relais bereits die Verbindung der Spannungsquelle zu der Steuerung für die Bremseinrichtung getrennt ist. Hierzu kann ein Schaltschloß vorgesehen sein, das in seiner zweiten Position bereits die Spannungsversorgung für die Steuerung der Bremseinrichtung unterbricht. In diesem Fall kann das erste Relais aus der vorgenannten Ausgestaltung entfallen.

In einer bevorzugten Ausgestaltung ist an die Zuleitungen der Bremseinrichtung ein Brückengleichrichter geschaltet, der einen Induktionsstrom aus der Magnetbremse in einen parallel zu einem Widerstand geschalteten Kondensator leitet. Wird die Spannungsversorgung der Bremseinrichtung beendet, so fängt die Brückengleichrichterschaltung zurückfließende Ladungen auf, indem diese in einen Kondensator geleitet werden. Über den Ohm'schen Widerstand kann die Spannung am Kondensator abgebaut werden.

In einer bevorzugten Ausgestaltung des erfindungsgemäßen Flurförderzeugs wird dieses über eine Deichsel geführt, wobei der zusätzliche Schalter im Deichselkopf vorgesehen ist. Bevorzugt handelt es sich bei dem zusätzlichen Schalter um einen Tastschalter, der beispielsweise beim normalen Betrieb für die Schleichfahrt, Hupen oder dergleichen vorgesehen ist. Als Bremseinrichtung ist bevorzugt eine Magnetbremse vorgesehen.

Ein Ausführungsbeispiel der Erfindung wird nachfolgend anhand von Zeichnungen näher erläutert.

Es zeigt:
- Fig. 1: einen Signalflußplan,
- Fig. 2: den Schaltplan zu einer ersten Ausgestaltung,
- Fig. 3: den Schaltplan zu einer zweiten Ausgestaltung und
- Fig. 4: eine Schaltplatine zu dem Schaltplan aus Figur 2.

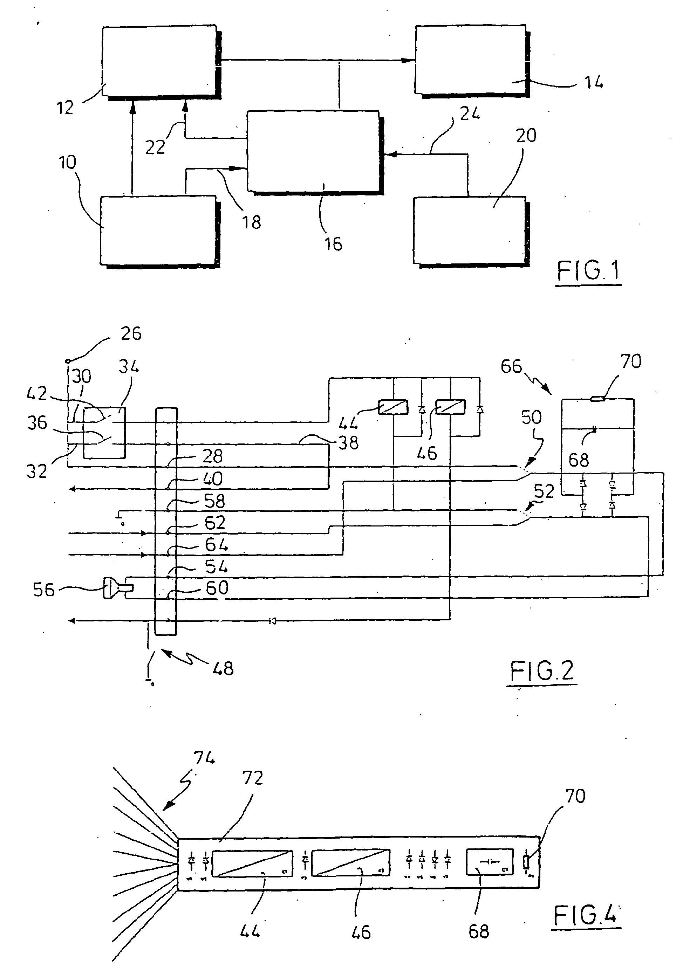

Fig. 1 zeigt schematisch den Signalflußplan für den Notbetrieb bei dem erfindungsgemäßen Flurförderzeug. Ein zweistufiges Schaltschloß 10 legt an eine Fahrsteuerung 12 in der ersten Position ein Signal an. Die Fahrsteuerung 12 erzeugt daraufhin, ein Bremssignal, das an eine Magnetbremse 14 weitergeleitet wird. In der zweite Schaltposition liegt ein Freigabesignal 18 an einer Adapterplatine 16 an. Auf der Adapterplatine 16 wird ein Signal 22 generiert, das die Fahrsteuerung 12 ausschaltet. Wird der Taster 20 betätigt, so erzeugt dieser ein Freigabesignal 24, das ebenfalls an der Adapterplatine 16 anliegt. Liegen Signale 18 und 24 an der Adapterplatine 16 an, so wird die Magnetbremse 14 direkt mit einer Spannungsquelle für das Flurförderzeug verbunden, so daß die Magnetbremse sich löst.

Fig. 2 zeigt einen Schaltplan für den Notbetrieb. In 26 liegt ein Pol der Spannungsversorgung an der Schaltungsanordnung an. Die Spannung liegt am Anschluß 28 direkt an der Schaltungsanordnung an. In 30 und 32 liegt die Versorgungsspannung an einem Schlüsselschalter 34 an. Der Schlüsselschalter 34 schaltet in seiner ersten Position den Schalter 38, so daß die Versorgungsspannung 26 an der Schaltungsanordnung anliegt und über den geschlossenen Schalter 38 über den Ausgang 40 an einer Steuerung anliegt.

Wird der Schlüsselschalter in Position 2 geschaltet, so schließt Schalter 42. Über den geschlossen Schalter 42 liegt die Batteriespannung 26 an dem Relais 44 an. Das Relais 44 öffnet den Schalter 38. Ebenfalls liegt die Betriebsspannung an dem zweiten Relais 46 an. Relais 46 wird erregt, wenn Taster 48 geschlossen ist. Relais 46 stellt die Schalter 50 und 52 um. In der geschalteten Stellung verbindet Schalter 52 die direkt an 28 anliegende Batteriespannung 26 mit der Versorgungsleitung 54 der Magnetbremse 56. Das erregte zweite Relais 46 schaltet ebenfalls den Schalter 53 und verbindet den Massenanschluß 58 mit dem zweiten Versorgungsanschluß 60 der Magnetbremse 56.

Im nicht erregten Zustand des zweiten Relais 56 (diese Schaltposition ist in Fig. 2 dargestellt) verbinden die Schalter 50 und 52 die Steuereingänge 62 und 64 mit den Versorgungsleitungen 54 und 60 der Magnetbremse 56.

Um den durch das Ausschalten der Magnetbremse entstehenden Induktionsstrom zu eliminieren, wird die in der Magnetbremse befindliche Ladung über einen Brückengleichrichter 66 in einen Kondensator 68 geleitet. Der Kondensator entlädt sich über den Ohm'schen Widerstand 70 in einem vorbestimmten Zeitraum.

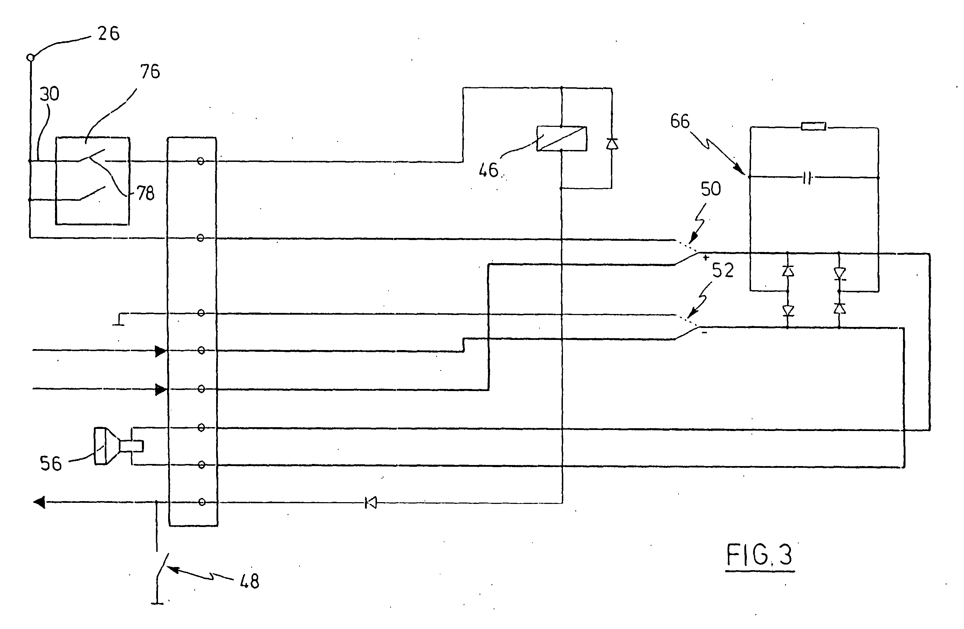

Fig. 3 zeigt einen Schaltplan mit einem alternativen Schaltschloß 76. Gleiche Elemente mit dem Schaltplan aus Fig. 2 tragen gleich Bezugszeichen. Im Gegensatz zu dem Schaltschloß 34, besitzt das Schaltschloß 76 die Eigenschaft, daß in der zweiten Position, die Spannungsversorgung für die Steuerung der Bremseinrichtung unterbunden ist. In Fig. 3 ist der Schalter 78 geöffnet. Indem das Schaltschloß bereits in der zweiten Position die herkömmliche Verbindung aus der ersten Position trennt, kann auf ein Relais verzichtet werden und es ist lediglich das Relais 46 erforderlich, das über die Schaltstellung 50 und 52 die Spannungsversorgung direkt mit der Bremseinrichtung verbindet.

Fig. 4 zeigt die beispielhafte Anordnung der Schaltungselemente auf einer Platine 72. Aus Fig. 4 ist ersichtlich, daß die Platine 72 eine kompakte Größe besitzt und problemlos mit der Anschlußleitung 74 nachgerüstet werden kann.

Mit dem erfindungsgemäßen Flurförderzeug ist es möglich, einen Serviceschlüssel beispielsweise beim Filialleiter eines Einkaufsmarktes zu hinterlegen. Der Filialleiter kann diesen in das reguläre Schaltschloß des Flurförderzeuges stecken und dies in die Position zwei drehen. Durch einfaches Betätigen des Schleichfahrttasters kann die elektrische Bremseinrichtung gelöst und das ausgefallene Flurförderzeug nun aus dem Geschäftsbereich entfernt werden. Zu Integration der Elektronik in die bereits vorhandene Elektronik sind keine zusätzlichen Kabelbäume zu verlegen. Lediglich eine Steuerleitung für das Schaltschloß ist vorzusehen.

## Patentansprüche

1. Flurförderzeug mit einem elektrischen Antrieb, insbesondere Elektrohubwagen, mit einer elektrisch betätigen Bremseinrichtung, das folgendes aufweist:
- ein mit einem Schlüssel betätigbaren Schalter (34) und einen zusätzlichen Schalter (48),
- wobei im geschalteten Zustand von Schalter und zusätzlichem Schalter eine Spannung (26) direkt an der Bremseinrichtung (56) anliegt, um diese zu lösen.

2. Flurförderzeug nach Anspruch 1, **dadurch gekennzeichnet, daß** ein zweistufiges Schaltschloß in seiner zweiten Position ein Lösen der Bremseinrichtung durch Betätigung des zusätzlichen Schalters zuläßt.

3. Flurförderzeug nach Anspruch 2, **dadurch gekennzeichnet, daß f**ür das Schaltschloß zwei Typen von Schlüsseln vorgesehen sind, von denen ein erster Typ nur ein Schalten des Schalters in die erste Position zuläßt und der zweite Typ ein Schalten in die erste und die zweite Position erlaubt.

4. Flurförderzeug nach einem der Ansprüche 1 bis 3, **dadurch gekennzeichnet, daß** eine Schaltungsplatine vorgesehen ist, die zwei Relais (44, 46) aufweist, von denen ein erstes im erregten Zustand die Verbindung von der Spannungsquelle zu einer Steuerung trennt und das zweite Relais im erregten Zustand die Spannungsquelle direkt mit der Bremseinrichtung verbindet.

5. Flurförderzeug nach Anspruch 4, **dadurch gekennzeichnet, daß** das erste Relais erregt wird, wenn der Schlüssel betätigte Schalter geschlossen ist, und das zweite Relais erregt wird, wenn beide Schalter geschlossen sind.

6. Flurförderzeug nach einem der Ansprüche 1 bis 3, **dadurch gekennzeichnet, daß** eine Schaltungsplatine vorgesehen ist, die ein Relais aufweist, das im erregten Zustand die Spannungsquelle direkt mit der Bremseinrichtung verbindet.

7. Flurförderzeug nach einem der Ansprüche 1 bis 6, **dadurch gekennzeichnet, daß** an die Zuleitung zu der Bremseinrichtung ein Brückengleichrichter geschaltet ist, der einen Strom aus der Bremseinrichtung in einen Kondensator leitet, der parallel zu einem Widerstand geschaltet ist, der zur Entladung des Kondensators dient.

8. Flurförderzeug nach einem der Ansprüche 1 bis 7, **dadurch gekennzeichnet, daß** eine Deichsel mit einem Deichselkopf vorgesehen ist, in dem der zusätzliche Schalter angeordnet ist.

9. Flurförderzeug nach Anspruch 8, **dadurch gekennzeichnet, daß** der zusätzliche Schalter als Tastschalter ausgebildet ist.

10. Flurförderzeug nach Anspruch 9, **dadurch gekennzeichnet, daß** der Tastschalter als Schalter für die Schleichfahrt, Hupe dergleichen vorgesehen ist.

11. Flurförderzeug nach einem der Ansprüche 1 bis 10, **dadurch gekennzeichnet, daß** als Bremseinrichtung eine Magnetbremse vorgesehen ist.

## Claims

1. An industrial truck with an electrical drive, especially an electrical lift truck with an electrically actuated braking device, which has the following:
- a switch (34) actuated with a key and an additional switch (48),
- wherein in the switched-on state of the switch and the additional switch, a voltage (26) is applied directly to the braking device (56), to release it.

2. The industrial truck according to claim 1, **characterized in that** a two-stage switch lock in its second position permits a release of the braking device by actuation of the additional switch.

3. The industrial truck according to claim 2, **characterized in that** two types of keys are provided for the switch lock of which the first type only permits a switching of the switch into the first position, and the second type permits a switching into the first and the second position.

4. The industrial truck according to one of the claims 1 to 3, **characterized in that** a circuit board is provided which has two relays (44, 46), of which a first, in the activated state separates the connection of the voltage source to a control, and the second relay in the activated state connects the voltage source directly with the braking device.

5. The industrial truck according to claim 4, **characterized in that** the first relay is activated when the switch actuated by the key is closed, and the second relay is activated when both switches are closed.

6. The industrial truck according to one of the claims 1 to 3, **characterized in that** a circuit board is provided that has one relay, which in the activated state connects the voltage source directly with the braking device.

7. The industrial truck according to one of the claims 1 to 6, **characterized in that** a bridge rectifier is switched into the supply line to the braking device, wherein said bridge rectifier supplies a current from the braking device into a capacitor, which is connected in parallel to a resistor, which serves for discharging the capacitor.

8. The industrial truck according to one of the claims 1 to 7, **characterized in that** a shaft is provided with a shaft head, in which the additional switch is arranged.

9. The industrial truck according to claim 8, **characterized in that** the additional switch is built as a push-button.

10. The industrial truck according to claim 9, **characterized in that** the push-button switch is provided as a switch for crawl-speed, a horn or similar.

11. The industrial truck according to one of the claims 1 to 10, **characterized in that** an electro-magnet brake is provided as the braking device.

## Revendications

1. Chariot de manutention avec un entraînement électrique, en particulier un chariot élévateur électrique, avec un dispositif de freinage à actionnement électrique, comprenant :
- un interrupteur (34) pouvant être actionné par une clé et un interrupteur supplémentaire (48),
- dans lequel à l'état commuté de l'interrupteur et de l'interrupteur supplémentaire, une tension (26) est appliquée directement au dispositif de freinage (56) pour débloquer celui-ci.

2. Chariot de manutention selon la revendication 1, **caractérisé en ce qu'**une serrure de contact à deux niveaux permet dans sa seconde position un déblocage du dispositif de freinage par l'actionnement de l'interrupteur supplémentaire.

3. Chariot de manutention selon la revendication 2, **caractérisé en ce que** pour la serrure de contact, deux types de clé sont prévus, dont un premier type ne permet qu'une commutation de l'interrupteur dans la première position et le second type autorise une commutation dans la première et la seconde position.

4. Chariot de manutention selon l'une des revendications 1 à 3, **caractérisé en ce qu'**un circuit imprimé est prévu, présentant deux relais (44, 46), dont un premier déconnecte à l'état excité la connexion entre la source de tension et une commande et le second relais connecte à l'état excité la source de tension directement avec le dispositif de freinage.

5. Chariot de manutention selon la revendication 4, **caractérisé en ce que** le premier relais est excité lorsque l'interrupteur actionné par clé est fermé, et le second relais est excité lorsque les deux interrupteurs sont fermés.

6. Chariot de manutention selon l'une des revendications 1 à 3, **caractérisé en ce qu'**un circuit imprimé est prévu, présentant un relais qui connecte à l'état excité la source de tension directement avec le dispositif de freinage.

7. Chariot de manutention selon l'une des revendications 1 à 6, **caractérisé en ce qu'**un redresseur en pont est branché à l'alimentation du dispositif de freinage qui conduit un courant depuis le dispositif de freinage vers un condensateur branché en parallèle avec une résistance servant à la décharge du condensateur.

8. Chariot de manutention selon l'une des revendications 1 à 7, **caractérisé en ce qu'**un timon avec une tête de timon est prévu, dans lequel est placé l'interrupteur supplémentaire.

9. Chariot de manutention selon la revendication 8, **caractérisé en ce que** l'interrupteur supplémentaire est constitué en tant que bouton-poussoir.

10. Chariot de manutention selon la revendication 9, **caractérisé en ce que** le bouton-poussoir est prévu comme interrupteur pour la marche lente, avertisseur ou similaire.

11. Chariot de manutention selon l'une des revendications 1 à 10, **caractérisé en ce qu'**un frein magnétique est prévu comme dispositif de freinage.
